# EUROPÄISCHE PATENTSCHRIFT

(11) **EP 0 891 276 B1**
(45) Veröffentlichungstag und Bekanntmachung des Hinweises auf die Patenterteilung: **27.03.2002**
(21) Anmeldenummer: 97918118.7
(22) Anmeldetag: 07.04.1997
(51) Int. Cl.: B60T 13/68, B60T 8/36, F16K 31/06

(54) **SITZVENTIL**
SEAT VALVE
SOUPAPE A SIEGE

(30) Priorität: 13.04.1996 DE 19614631
(43) Veröffentlichungstag der Anmeldung: 20.01.1999
(73) Patentinhaber: Continental Teves AG & Co. oHG, 60488 Frankfurt (DE)
(72) Erfinder: BECK, Erhard, D-35781 Weilburg (DE)
(74) Vertreter: Blum, Klaus-Dieter, Dipl.-Ing.
(86) Internationale Anmeldenummer: EP9701728
(87) Internationale Veröffentlichungsnummer: WO9738885

(56) Entgegenhaltungen:
- EP-A- 0 713 813
- DE-A- 3 102 232
- DE-A- 4 030 571

## Beschreibung

Die Erfindung betrifft ein Sitzventil für die Steuerung eines Pneumatik- oder Hydraulidrucks zwischen wenigstens zwei Druckmittelkanälen nach dem Oberbegriff des Patentanspruchs 1.

Aus der DE 40 30 571 A1 ist bereits ein elektromagnetisch stromlos geschlossenes Sitzventil für die Steuerung eines hydraulischen Drucks bekannt geworden, bestehend aus einem Magnetanker, an dem ein Ventilschließglied angebracht ist, mit einer Feder, die das Ventilschließglied mit einer bestimmten Vorspannung gegen einen Ventilsitz drückt, der im Ventilgehäuse befestigt ist, mit einem Magnetkern, der in einer dünnwandigen Ventilhülse gehalten ist und mit einer Ventilspule, die an der Ventilhülse befestigt ist. Die Wicklung der Ventilspule ist derart ausgelegt, daß der Magnetanker ausschließlich eine translatorische Bewegung vollzieht, so daß das Ventilschließglied in Abhängigkeit der elektromagnetischen Erregung der Ventilspule, entweder hubabhängig geöffnet oder geschlossen ist. Damit ergibt sich ein binäres Schaltverhalten mit relativ schnellen Hubbewegungen. Jedoch läßt sich hierdurch die Durchflußmenge nicht variabel einstellen.

Die Aufgabe der Erfindung ist es, ein Sitzventil der eingangs genannten Art mit einfachen, funktionssicheren Mitteln dahingehend zu verbessern, daß über die eigentliche translatorische Bewegung des Ventilschließgliedes hinaus die Durchflußmenge mit möglichst kleinem elektrischen Energiebedarf variabel eingestellt werden kann.

Diese Aufgabe wird erfindungsgemäß für ein Sitzventil der gattungsbildenden Art mit den Merkmalen des Patentanspruchs 1 gelöst.

Weitere Merkmale und Vorteile sowie Anwendungsmöglichkeiten der Erfindung gehen im nachfolgenden aus der Beschreibung zweier Ausführungsbeispiele hervor.

Es zeigen:
- Fig. 1: eine zweckmäßige Konstruktion der wesentlichen Elemente des Erfindungsgegenstandes,
- Fig. 2: eine Draufsicht auf eine Drehfeldwicklung und auf den Magnetanker zur Verwendung für den Erfindungsgegenstand.

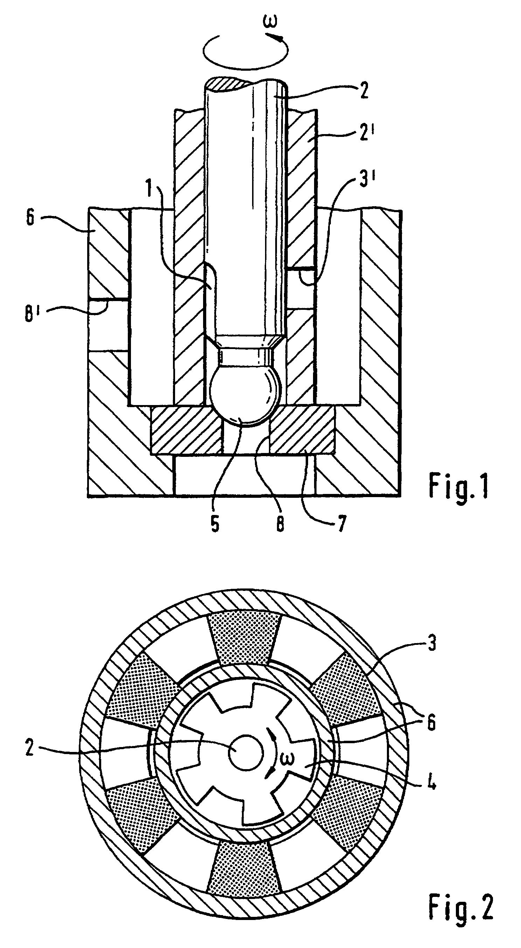

Es zeigt die Fig. 1 in vergrößertem Maßstab eine Teilansicht eines stromlos geschlossenen Sitzventils für die Steuerung eines Pneumatik- oder Hydraulikdrucks. Das Sitzventil weist ein im wesentlichen kugelförmiges Ventilschließglied 5 auf, das in der abbildungsgemäßen Grundstellung an einem im wesentlichen plattenförmigen Ventilsitz 7 zur Anlage gelangt und dichtet. Es schließt sich ein verjüngter Übergangsbereich zu einem Stößel 2 an das Ventilschließglied 5 an, wobei der Stößel 2 innerhalb einer Hülse 2' möglichst leckagefrei gedichtet ist. In der Hülse 2' befindet sich in der Wandung eine Öffnung 3', die abbildungsgemäß vom Schaft des Stößels 2 druckmitteldicht überdeckt ist. Auf dem von des Öffnung 3' abgewandten Schaftabschnitt des Stößels 2 befindet sich ein als Steuernut wirksamer Steuerkanal 1, der durch Rotation des Stößels 2 mit der Öffnung 3' in Überdekkung gebracht werden kann. Die Öffnung 3' steht über einen Ringraum in einem Ventilgehäuse 6 mit einem Druckmittelkanal 8' in Verbindung, während ein in der Abbildung unterhalb des Ventilschließgliedes 5 angeschlossener Druckmittelkanal 8 sowohl durch die Schließstellung des Ventilschließgliedes 5 als auch durch den die Öffnung 3' verschließenden Schaftbereich des Stößels 2 vom Druckmittelkanal 8' getrennt ist. Die Fig. 1 nimmt ausschließlich auf die wesentlichen Konstruktionselemente im Bereich des Ventilschließgliedes 5 Bezug, ohne auf mögliche Einzelheiten der Ausgestaltung einzugehen. Die Fig. 1 ist somit als Prinzipdarstellung der Erfindung zu sehen. Auch wenn der sich an der Stößel 2 anschließende Ventilabschnitt nicht gezeigt ist, ist prinzipiell von einer Auslegung des Sitzventils nach DE 40 30 571 A1 auszugehen, wonach sich dem Stößel 2 ein Magnetanker 4 in einem geschlossenen Ventilgehäuse 6 anfügt, der von einer den Magnetankerhub erzeugenden Ventilspule umschlossen ist.

Weitere Einzelheiten zur erfindungsgemäßen Ausbildung des Magnetankers 4 und der Spulenwicklung gehen im nachfolgenden aus Fig. 2 hervor. Die Fig. 2 zeigt eine Draufsicht auf den im wesentlichen in seinem Querschnittsprofil sternförmig gestalteten Magnetanker 4, der innerhalb des Ventilgehäuses 6 sowohl translatorisch als auch rotatorisch bewegbar ist. Das im Bereich des Magnetankers 4 schraffierte, hülsenförmige Ventilgehäuse 6 nimmt an seiner Außenwandung eine Drehfeldwicklung 3 auf, die je nach elektrischer Bestromung und damit Veränderung des Drehfeldes den Magnetanker 4 um einen bestimmten Winkel verdreht, womit auch die Steuernut (Steuerkanal 1) am Stößel 2 mehr oder weniger mit der Öffnung 3' in Überdeckung gelangt, um bei geöffnetem Ventilschließglied 5 den Druckmitteldurchlaß zwischen den beiden Druckmittelkanälen 8, 8' variieren zu können. Die Funktionsweise kann dem Arbeitsprinzip eines Reluktanzmotors entsprechen, wonach beim Erzeugen eines Drehfeldes in der Drehfeldwicklung 3 der Magnetanker 4 und damit der Stößel 2 mit beliebig einstellbarer Drehgeschwindigkeit rotiert. Damit läßt sich der Druckmittel-Durchsatz und damit das Zeitintervall in dem die Öffnung 3' mit dem Kanal 1 in Überdeckung steht, beliebig verändern. Gleichfalls ist bei entsprechenden Ansteuerverfahren eine Drehrichtungsumkehr des Magnetankers 4 möglich, so daß dieser zur wechselseitigen Überdeckung der Öffnung 3' den Stößel 2 zeitweise hin und her drehen kann. Die für die Hubbewegung des Magnetankers 4 erforderliche Ventilspule kann baulich mit der Drehfeldwicklung 3 vereinigt sein. Die Ventilspule weist sodann zwei voneinander unabhängig ansteuerbare Wicklungsteile auf, wobei ein Teil zum Schließen und Öffnen des Ventils vorgesehen ist, während der andere Teil die Drehwinkelorientierung des Magnetankers 4 bestimmt.

Der Erfindungsgegenstand hat den Vorteil, daß sowohl die Drehfeldwirkung als auch die Magnetankertranslation getrennt als auch in Überlagerung möglich sind. Dies bedeutet, daß der Stößel 2 sowohl im geschlossenen als auch im offenen Zustand rotieren kann, um nach Bedarf einen größeren oder kleineren Steuerquerschnitt zwischen der Öffnung 3' und dem Kanal 1 voreinzustellen, oder diesen alternativ während des Magnetankerhubs zu variieren. Die Durchflußmenge ist somit analog steuer- bzw. regelbar, wobei Druckänderungen des Fluides keine Beeinträchtigung der erforderlichen Verstellkräfte am Magnetanker hervorrufen. Der Erfindungsgegenstand gewährleistet ein energetisch günstiges Auf- und Zuschalten des Ventils mit entsprechend kleinem Magnetanker-Luftspalt.

### Bezugszeichenliste

- 1: Steuerkanal
- 2: Stößel
- 2': Hülse
- 3: Drehfeldwicklung
- 3': Öffnung
- 4: Magnetanker
- 5: Ventilschließglied
- 6: Ventilgehäuse
- 7: Ventilsitz
- 8, 8': Druckmittelkanäle

## Patentansprüche

1. Sitzventil für die Steuerung eines Pneumatik- oder Hydraulikdrucks zwischen wenigstens zwei Druckmittelkanälen, insbesondere für die Verwendung in Kraftfahrzeugbremsanlagen, bestehend aus einem mit einem Magnetanker verbunden Ventilschließglied, einer Feder zur Grundpositionierung des Ventilschließgliedes gegenüber einem Ventilsitz im Ventilgehäuse, mit einem Magnetkern sowie einer Ventilspule zur translatorischen Bewegung des Magnetankers, **dadurch gekennzeichnet, daß** Mittel (1,2,2',3,3') zur Erzeugung einer Rotationsbewegung des Magnetankers (4) und zur Übertragung der Rotationsbewegung auf das Ventilschließglied (5) zum Zwecke der variablen Steuerung eines Druckmitteldurchlasses vorgesehen sind.

2. Sitzventil nach Anspruch 1, **dadurch gekennzeichnet, daß** als Mittel zur variablen Druckmitteldurchlaßsteuerung ein mit einem Steuerkanal (1) versehener Stößel (2) den Magnetanker (4) mit dem Ventilschließglied (5) verbindet.

3. Sitzventil nach Anspruch 1 oder 2, **dadurch gekennzeichnet, daß** als Mittel zur variablen Druckmitteldurchlaßsteuerung das Ventilschließglied (5) in einer zwischen dem Ventilsitz (7) und dem Ventilgehäuse (6) dichtenden Hülse (2') geführt ist, die mit einer die Wandung durchdringenden Öffnung (3') versehen ist.

4. Sitzventil nach Anspruch 1, **dadurch gekennzeichnet, daß** als Mittel zur Erzeugung der Rotationsbewegung des Magnetankers (4) eine Drehfeldwicklung (3) in Nähe der den Magnetankerhub erzeugenden Ventilspule den Magnetanker (4) umschließt.

5. Sitzventil nach Anspruch 3, **dadurch gekennzeichnet, daß** der Stößel (2) oberhalb der Öffnung 3' in der Hülse (2') druckmitteldicht geführt ist.

6. Sitzventil nach Anspruch 2, **dadurch gekennzeichnet, daß** der Steuerkanal (1) als Längsnut ausgeführt ist, die abhängig von der Drehwinkelposition des Stößels (2) die Öffnung (3') in der Hülse (2') zumindest abschnittsweise überdeckt.

7. Sitzventil nach Anspruch 1, **dadurch gekennzeichnet, daß** durch Rotation während der Ventilbetätigung die Haftreibung zwischen den einzelnen Ventilteilen reduziert ist.

## Claims

1. Seat valve for controlling pneumatic or hydraulic pressure between at least two pressure fluid channels, in particular for use in automotive vehicle brake systems, which includes a valve closure member connected to a magnetic armature, a spring for the basic positioning of the valve closure member in relation to a valve seat in the valve housing, a magnetic core and a valve coil for the translatory movement of the magnetic armature,
**characterized in that** means (1,2,2',3,3') are provided to produce a rotary movement of the magnetic armature (4) and to transmit the rotary movement to the valve closure member (5) for the variable control of a pressure fluid passage.

2. Seat valve as claimed in claim 1,
**characterized in that** as a means for the variable control of the pressure fluid passage, a tappet (2) provided with a control channel (1) connects the magnetic armature (4) to the valve closure member (5).

3. Seat valve as claimed in claim 1 or claim 2,
**characterized in that** as a means for the variable control of the pressure fluid passage, the valve closure member (5) is guided in a sleeve (2') which seals inbetween the valve seat (7) and the valve housing (6) and includes an opening (3') that penetrates the wall.

4. Seat valve as claimed in claim 1,
**characterized in that** as a means for the generation of the rotary movement of the magnetic armature (4), a rotating field winding (3) embraces the magnetic armature (4) in proximity to the valve coil which generates the stroke of the magnetic armature.

5. Seat valve as claimed in claim 3,
**characterized in that** the tappet (2) is guided above the opening (3') in the sleeve (2') in a pressure-fluid tight manner.

6. Seat valve as claimed in claim 2,
**characterized in that** the control channel (1) is configured as a longitudinal groove which overlaps, at least in sections, the opening (3') in the sleeve (2') depending on the rotating angle position of the tappet (2).

7. Seat valve as claimed in claim 1,
**characterized in that** the static friction between the individual valve parts is reduced due to rotation during valve actuation.

## Revendications

1. Valve à levée pour la commande d'une pression pneumatique ou hydraulique entre au moins deux conduits d'agent de pression, notamment pour l'utilisation dans des dispositifs de freinage pour véhicule automobile, constituée d'un obturateur de valve relié à une armature mobile d'électroaimant, d'un ressort servant au positionnement initial de l'obturateur de valve vis-à-vis d'un siège de valve ménagé dans le boîtier de valve, d'un noyau d'électroaimant et d'une bobine de valve servant au déplacement en translation de l'armature mobile d'électroaimant, **caractérisée en ce que** des moyens (1, 2, 2', 3, 3') servant à la production d'un déplacement en rotation de l'armature mobile d'électroaimant (4) et à la transmission du déplacement en rotation à l'obturateur de valve (5) sont prévus en vue de la commande variable d'un passage d'agent de pression.

2. Valve à levée suivant la revendication 1, **caractérisée en ce qu'**en tant que moyens servant à la commande variable de passage d'agent de pression, une tige-poussoir (2) pourvue d'un conduit de commande (1) relie l'armature mobile d'électroaimant (4) à l'obturateur de valve (5).

3. Valve à levée suivant la revendication 1 ou 2, **caractérisée en ce qu'**en tant que moyens servant à la commande variable de passage d'agent de pression, l'obturateur de valve (5) est guidé dans un manchon (2') qui assure l'étanchéité entre le siège de valve (7) et le boîtier de valve (6) et qui est pourvu d'une ouverture (3') traversant la paroi.

4. Valve à levée suivant la revendication 1, **caractérisée en ce qu'**en tant que moyens pour la production du déplacement en rotation de l'armature mobile d'électroaimant (4), un enroulement de champ tournant (3) entoure l'armature mobile d'électroaimant (4) au voisinage de la bobine de valve produisant la course d'armature mobile d'électroaimant.

5. Valve à levée suivant la revendication 3, **caractérisée en ce que** la tige-poussoir (2) est guidée d'une manière étanche à l'agent de pression au-dessus de l'ouverture (3') ménagée dans le manchon (2').

6. Valve à levée suivant la revendication 2, **caractérisée en ce que** le conduit de commande (1) est réalisé sous forme d'une rainure longitudinale qui, en fonction de la position angulaire de la tige-poussoir (2) en rotation, couvre au moins par section l'ouverture (3') ménagée dans le manchon (2').

7. Valve à levée suivant la revendication 1, **caractérisée en ce qu'**au moyen d'une rotation pendant l'actionnement de valve, le frottement d'adhérence entre les différentes pièces de valve est réduit.
